# EUROPÄISCHE PATENTSCHRIFT

(11) **EP 3 097 318 B1**
(45) Veröffentlichungstag und Bekanntmachung des Hinweises auf die Patenterteilung: **17.02.2021**
(21) Anmeldenummer: 14827727.0
(22) Anmeldetag: 16.12.2014
(51) Int. Cl.: F16D 25/08

(54) **HYDRAULISCHE ZYLINDEREINHEIT MIT FLEXIBLER ANBINDUNG**
HYDRAULIC CYLINDER UNIT HAVING A FLEXIBLE CONNECTION
UNITÉ CYLINDRE HYDRAULIQUE À FIXATION SOUPLE

(30) Priorität: 24.01.2014 DE 102014201270
(43) Veröffentlichungstag der Anmeldung: 30.11.2016
(73) Patentinhaber: Schaeffler Technologies AG & Co. KG, 91074 Herzogenaurach (DE)
(72) Erfinder: SESTER, Christof, 77723 Gengenbach (DE); MARKERT, Melanie, 78132 Hornberg (DE)
(86) Internationale Anmeldenummer: PCT/DE2014/200720
(87) Internationale Veröffentlichungsnummer: WO 2015/110110

(56) Entgegenhaltungen:
- DE-A1-102011 087 519
- GB-A- 1 359 026

## Beschreibung

Die Erfindung betrifft eine hydraulische Zylindereinheit, wie einen Geber-, Seminehmer- oder Nehmerzylinder, für eine hydraulisch oder semi-hydraulisch betätigbare Kraftfahrzeugkupplung, wobei die Zylindereinheit ein Zylindergehäuse aufweist, das an einer Mantelfläche wenigstens eine bajonettartige Befestigungsgeometrie zur Anbindung der Zylindereinheit an einer kraftfahrzeug- oder kupplungsseitigen Haltestruktur, wie einer Fahrzeugspritzschutzwand oder einem Flansch eines Kupplungs- oder Getriebegehäuses, aufweist.

Aus dem Stand der Technik ist bekannt, dass eine Kraftfahrzeugkupplung statt mit einem Seilzug auch hydraulisch bzw. semi-hydraulisch betätigt werden kann. Bei einer solchen Betätigung für eine Kraftfahrzeugkupplung ist an einem Kupplungspedal, das in einem Fahrzeuginnenraum angeordnet ist, ein Geberzylinder angeordnet, der über wenigstens eine dazwischen geschaltete Druckleitung, wie etwa einer Hydraulikleitung, mit einem am Kupplungs- bzw. Getriebegehäuse angeordneten Nehmer- oder Seminehmerzylinder fluidisch verbunden ist. Dieser Nehmer- oder Seminehmerzylinder ist dazu eingerichtet, die Kraftfahrzeugkupplung bei Betätigung des Kupplungspedals zu trennen und beim Loslassen des Kupplungspedals wieder zu verbinden. Hierfür kann bspw. auch ein Ausrücklager der Kraftfahrzeugkupplung durch bspw. den Seminehmerzylinder semi-hydraulisch betätigt werden. Der Geberzylinder, die wenigstens eine Hydraulikleitung und der Nehmer- oder Seminehmerzylinder bilden somit ein hydraulisches oder semi-hydraulisches System zur Betätigung der Kraftfahrzeugkupplung. Ein solches System kann bspw. mit Bremsflüssigkeit des Kraftfahrzeugs betrieben werden.

Weiter ist bekannt, dass ein solcher Geber- bzw. Nehmerzylinder über verschiedene Verbindungsarten bzw. Anbindungsmöglichkeiten an einer dafür vorgesehenen kraftfahrzeug- oder kupplungsseitigen Haltestruktur angebunden bzw. befestigt werden kann. So ist es bspw. möglich, einen in Nachbarschaft zu dem Kupplungspedal angeordneten Geberzylinder mittels einer Bajonettanbindung oder -verbindung an einer Spritzschutzwand eines Kraftfahrzeugs oder bspw. auch an einer separaten Haltestruktur anzubinden und zu befestigen. In diesem Fall kann der Geberzylinder einen Teil und die Haltestruktur einen mit diesem zusammenwirkenden Teil der Bajonettanbindung aufweisen, so dass auf diese Weise eine Bajonettverbindung hergestellt werden kann.

Alternativ dazu, kann es bei anderen Kraftfahrzeugmodellen allerdings auch möglich sein, den Geberzylinder an einer entsprechend unterschiedlich ausgebildeten Haltestruktur stattdessen mittels einer Verschraubung, bspw. mit selbstschneidenden Schrauben, vormontierten Schrauben oder einer Hülse für eine Verschraubung anzubinden bzw. zu befestigen.

Dabei ist die gewählte Verbindungsart bzw. Anbindungsmöglichkeit des Geberzylinders bspw. durch den im jeweiligen Kraftfahrzeug vorhandenen Bauraum oder die Erreichbarkeit desselben durch einen Monteur vorgegeben. Für einen Automobilzulieferer, der eine hydraulische Zylindereinheit in Form eines Geber- oder Seminehmer- oder Nehmerzylinders an einem Automobilhersteller ausliefert, bedeutet dies, dass je nach Kundenanforderung die vom Kunden gewünschte Verbindungsart bzw. Anbindungsmöglichkeit zur Anbindung der Zylindereinheit bereitgestellt werden muss. Das heißt, dass eine Vielzahl von konstruktiv unterschiedlichen Zylindereinheiten bereitgehalten werden muss. Diese Vielzahl von unterschiedlichen Anbindungsmöglichkeiten ergibt sich bspw. daraus, dass entweder eine Bajonettanbindung oder eine Verschraubung vorgesehen ist, und dass bei jeder Verbindungsart bzw. Anbindungsmöglichkeit unterschiedliche Abmaße gewünscht sein können. Dies ist jedoch nachteilig, da die Verbindungsart bzw. Anbindungsmöglichkeit je nach Kundenanforderung zumindest geringfügig angepasst werden muss, was jedoch häufig zu eirer dann erforderlichen Neukonstruktion der gesamten hydraulischen Zylindereinheit führt, so dass selbst geringfügige konstruktive Änderungen an der Zylindereinheit nur vergleichsweise kostenintensiv durchgeführt werden können. Aus der deutschen Offenlegungsschrift DE 10 2011 087 519 A1 ist ein Verfahren zum Fixieren eines Geberzylinders einer hydraulischen Betätigungsvorrichtung für eine Kupplung eines brennkraftmaschinengetriebenen Kraftfahrzeugs, an einem Bauteil bekannt, wobei das Verfahren die folgenden Schritte umfasst: a) Anlegen eines Dichtungsschilds an dem Bauteil; und b) Ausbilden einer kraft- und/oder formschlüssigen Verbindung zwischen dem Geberzylinder und dem Dichtungsschild durch das Bauteil hindurch. Die Verbindung kann dabei eine Bajonettverbindung oder eine Schnappverbindung oder eine Schraubverbindung sein.

Die Druckschrift GB 1 359 026 A betrifft ein hydraulisches Kupplungsbetätigungssystem mit einem Geberzylinder und einem Nehmerzylinder und eine diese miteinander verbindende Leitung. Der Geber- und der Nehmerzylinder sind jeweils an Teilen der Fahrzeugkarosserie mittels einer Bajonettverbindung montiert.

Es ist deshalb die Aufgabe der vorliegenden Erfindung, eine hydraulische Zylindereinheit für eine Kraftfahrzeugkupplung zur Verfügung zu stellen, die unter Einsatz konstruktiv möglichst einfacher Mittel ein flexibles Design der hydraulischen Zylindereinheit erlaubt.

Diese Aufgabe wird erfindungsgemäß dadurch gelöst, dass an der Befestigungsgeometrie eine separat dazu ausgebildete Platte angebracht und fixiert ist, wobei an der wenigstens einen bajonettartigen Befestigungsgeometrie ein Clip angebracht und ggf. fixiert ist. In anderen Worten weist das Zylindergehäuse der hydraulischen Zylindereinheit an einer Mantelfläche wenigstens eine bajonettartige Befestigungsgeometrie zur Anbindung der Zylindereinheit durch eine Bajonettverbindung an einer kraftfahrzeug- oder kupplungsseitigen Haltestruktur auf, wobei an der Befestigungsgeometrie bedarfsweise auch eine separat dazu ausgebildete Platte angebracht und fixiert ist, so dass die Zylindereinheit wahlweise mittels der Bajonettverbindung oder mittels einer durch die angebrachte und fixierte Platte ermöglichte Schraubverbindung an der Haltestruktur befestigt werden kann. Somit ermöglicht es die erfindungsgemäße Zylindereinheit, dass diese je nach Kundenanforderung entweder durch die an der Mantelfläche vorgesehene bajonettartige Befestigungsgeometrie oder, alternativ dazu, durch eine durch die angebrachte Platte ermöglichte Schraubverbindung angebunden werden kann. Der Clip erfüllt eine oder mehrere Funktionen. Bspw. ist der Clip als eine Art Montagehilfe für die an der Befestigungsgeometrie anbringbare Platte, wenn der Clip vor dem Anbringen der Platte an der Mantelfläche der Zylindereinheit bzw. an der bajonettartigen Befestigungsgeometrie angebracht und fixiert wird.

In diesem Fall funktioniert der Clip als eine Art Endanschlag für die Platte, so dass die Platte mit ihrem Erreichen des Endanschlags an dem bereits vorher angebrachten und fixierten Clip exakt an der gewünschten Position angeordnet ist. Zudem erfüllt der Clip auch eine Haltefunktion indem der Clip die Platte in axialer Richtung abstützt und ggf. gegen ein auf der dem Clip gegenüberliegenden Seite der Platte befindliches Gegenelement klemmt.

Vorteilhafte Ausführungsformen der Erfindung sind in den Unteransprüchen angegeben und werden nachfolgend näher erläutert.

So ist es zur weiteren Erhöhung der Flexibilität der Anbindungsmöglichkeiten der hydraulischen Zylindereinheit vorteilhaft, wenn die Mantelfläche wenigstens zwei axial hintereinander angeordnete, bajonettartige Befestigungsgeometrien aufweist. Dabei können die axial hintereinander bzw. axial benachbart zueinander angeordneten, bajonettartigen Befestigungsgeometrien im Wesentlichen konstruktiv und/oder geometrisch identisch oder auch unterschiedlich ausgebildet sein. Vorteilhaft ist daran, dass die auf diese Weise ausgestaltete hydraulische Zylindereinheit in wenigstens zwei unterschiedlichen Axiallagen bzw. Axialpositionen an der kraftfahrzeug- oder kupplungsseitigen Haltestruktur befestigt werden kann. Wenn die hydraulische Zylindereinheit bspw. an einer Spritzschutzwand eines Kraftfahrzeugs angebunden wird, kann je nach verwendeter bajonettartiger Befestigungsgeometrie der räumliche Abstand zwischen der hydraulischen Zylindereinheit und bspw. dem Kupplungspedal auf besonders einfache Weise variiert werden.

Zweckmäßig ist es auch, wenn die zwei bajonettartigen Befestigungsgeometrien zueinander versetzt und/oder über den Umfang der Mantelfläche verteilt angeordnet sind. In anderen Worten können die wenigstens zwei bajonettartigen Befestigungsgeometrien nicht nur exakt axial hintereinander, sondern auch an unterschiedlichen Winkelpositionen entlang dem Umfang der Mantelfläche angeordnet sein. Dies erhöht zusätzlich die Flexibilität hinsichtlich der Anbindungsmöglichkeiten der hydraulischen Zylindereinheit. So kann eine solche Zylindereinheit auch in unterschiedlichen radialen Positionen angebracht werden.

Konstruktiv besonders einfach kann der Clip an der Befestigungsgeometrie angebracht werden, wenn der Clip an einem Bajonettformelement der wenigstens einen bajonettartigen Befestigungsstruktur oder einem dazu axial benachbart angeordneten Cliphalteelement anbringbar ist.

Die separat ausgebildete, an der Befestigungsgeometrie anbringbare Platte kann in axialer Richtung besonders einfach fixiert werden, wenn die Platte durch den Clip gegen einen Anlagevorsprung der Befestigungsgeometrie drückbar bzw. klemmbar ist. In anderen Worten kann die Platte zwischen einem ohnehin an der Mantelfläche ausgebildeten Anlagevorsprung und dem zusätzlich anbringbaren Clip eingeklemmt werden, so dass die Platte in beiden axialen Richtungen entlang des Zylindergehäuses fixiert werden kann.

Besonders vorteilhaft kann die hydraulische Zylindereinheit als ein Geber- oder Nehmerzylinder für eine Kraftfahrzeugkupplung bzw. eine hydraulische oder semi-hydraulische Betätigung derselben eingesetzt werden.

Eine weitere, vorteilhafte Ausführungsvariante der Erfindung sieht vor, dass die Platte eine aus Blech gefertigte Blechplatte oder eine aus Kunststoff gefertigte Kunststoffplatte ist. Zusätzlich oder alternativ dazu, kann die Platte eine Topfform aufweisen. Wenn die Platte eine Topfform aufweist, kann die Flexibilität der erfindungsgemäßen hydraulischen Zylindereinheit zusätzlich verbessert werden, da die Topfform eine oder mehrere zusätzliche axiale Einbaulagen der hydraulischen Zylindereinheit ermöglicht, nämlich je nach axialer Länge des Topfes. Durch die Topfform kann der axiale Abstand zwischen der fixierten Lage der Platte am Zylindergehäuse bzw. an der Befestigungsgeometrie der Zylindereinheit und der Schraubverbindung bzw. -anlage an der kraftfahrzeug- oder kupplungsseitigen Haltestruktur zusätzlich variiert werden, so dass die Flexibilität hinsichtlich des Bauraums für die hydraulische Zylindereinheit zusätzlich erhöht werden kann.

Die vorliegende Erfindung betrifft auch ein System bestehend aus einer hydraulischen Zylindereinheit und einer bedarfsweise daran anbringbaren und/oder fixierbaren Platte. Ein solches System zeichnet sich dadurch aus, dass zwischen einer Bajonettverbindung und einer Schraubverbindung zur Anbindung der Zylindereinheit an einer kraftfahrzeug- oder kupplungsseitigen Haltestruktur gewählt werden kann und, zusätzlich dazu, auch verschiedene Positionen der Platte entlang der axialen Richtung des Zylindergehäuses möglich sind. Noch flexibler wird dieses System durch die variable geometrische Formgebung der Platte, durch die die Anbindungsposition der hydraulischen Zylindereinheit an der kraftfahrzeugseitigen- oder kupplungsseitigen Haltestruktur zusätzlich variiert werden kann.

Die Erfindung wird nachfolgend auch unter Zuhilfenahme einer Zeichnung näher erläutert, in der ein Ausführungsbeispiel beleuchtet wird. Es zeigen:
- Fig. 1: eine perspektivische Vorderansicht einer erfindungsgemäßen hydraulischen Zylindereinheit mit einer daran angebrachten Platte, die in einer axialen Richtung durch einen Clip fixiert ist,
- Fig. 2: einen Längsschnitt durch eine erfindungsgemäße hydraulische Zylindereinheit mit einer daran angeordneten Platte, die in einer axialen Richtung in einer ersten axialen Position durch einen Clip fixiert ist und an einer dem Clip gegenüberliegenden Seite an einer kraftfahrzeug- oder kupplungsseitigen Haltestruktur anliegt und
- Fig. 3: eine der Fig. 2 entsprechende Darstellung, wobei die Platte und der Clip in einer zweiten axialen Position entlang eines Zylindergehäuses der hydraulischen Zylindereinheit angeordnet sind.

Die Figuren sind lediglich schematischer Natur und dienen nur dem Verständnis der Erfindung. Die gleichen Elemente sind mit denselben Bezugszeichen versehen.

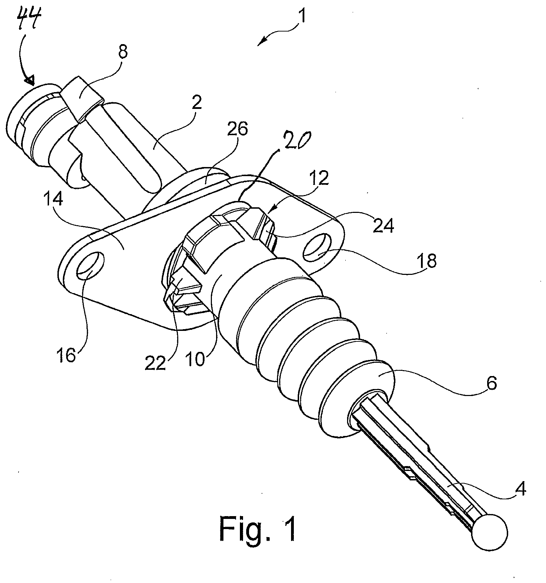

In Fig. 1 ist eine hydraulische Zylindereinheit 1 in einer perspektivischen Vorderansicht dargestellt. Die hydraulische Zylindereinheit 1 ist in diesem Ausführungsbeispiel als ein Geberzylinder für eine (nicht dargestellte) Kraftfahrzeugkupplung ausgebildet. Das heißt, dass die hydraulische Zylindereinheit 1 in diesem Ausführungsbeispiel kraftfahrzeugsseitig, insbesondere in Nachbarschaft zu einem (nicht dargestellten) Kupplungspedal angeordnet und mit diesem funktional verbunden ist.

Die Zylindereinheit 1 weist ein Zylindergehäuse 2 auf, das an einem ersten axialen Ende ein im Wesentlichen stabförmiges Betätigungselement 4 zur Anbindung an das (nicht dargestelltes) Kupplungspedal eines (ebenfalls nicht dargestellten) Kraftfahrzeugs aufweist. Zum Schutz vor Verschmutzungen, etwa vor Staub, schließt sich an das im Wesentlichen stabförmig ausgebildete Betätigungselement 4 eine Gummimanschette 6 an. An einem zweiten, dem ersten axialen Ende gegenüberliegenden axialen Ende weist das Zylindergehäuse 2 einen Nachlaufanschluss 8 zum Anschluss einer (nicht dargestellten) Nachlaufleitung zu einem bzw. von einem (ebenfalls nicht dargestellten) Nachlaufbehälter für ein Fluid als Sonderform eines Druckanschlusses zum Anschluss einer (nicht dargestellten) Druckleitung eines hydraulischen Systems auf. Diese Druckleitung kann dazu vorgesehen sein, die als Geberzylinder ausgebildete Zylindereinheit 1 mit einer in Nachbarschaft zu der zu betätigenden Kraftfahrzeugkupplung angeordneten, zweiten hydraulischen Zylindereinheit in Form eines Nehmer- oder Seminehmerzylinders fluidisch bzw. hydraulisch zu verbinden.

Des Weiteren ist in Fig. 1 erkennbar, dass eine Mantelfläche 10 des Zylindergehäuses 2 der Zylindereinheit 1 eine erste bajonettartige Befestigungsgeometrie 12 aufweist, die einen ersten Teil einer Bajonettverbindung zur kraftfahrzeug- oder kupplungsseitigen Anbindung der Zylindereinheit 1 ausbildet. An der ersten bajonettartigen Befestigungsgeometrie 12 ist eine als dazu separates Bauteil sowie näherungsweise rautenförmig ausgebildete Platte 14 angebracht bzw. angeordnet. Die Platte 14 ist in diesem Ausführungsbeispiel als gestanztes Blechteil ausgebildet und weist zwei in radialer Richtung voneinander beabstandete Durchgangsöffnungen 16, 18 auf, die einen Teil einer Schraubenverbindung ausbilden, die weiter unten erläutert wird. Diese Durchgangsöffnungen 16 und 18 sind in diesem Ausführungsbeispiel als Bohrungen ausgebildet.

Zudem weist die Platte 14 im Wesentlichen mittig eine Durchgangsöffnung 20 auf, damit die Platte 14 über bzw. auf das Zylindergehäuse 2 der hydraulischen Zylindereinheit 1 geschoben werden kann. Die im Wesentlichen mittig bzw. zentral ausgebildete Durchgangsöffnung 20 weist eine von einer kreisrunden Form abweichende Geometrie auf, so dass die Platte 14 entsprechend durch eine radial gerichtete Drehung derselben über Bajonettformelemente 22 und 24 der ersten bajonettartigen Befestigungsgeometrie 12 hinweg auf das Zylindergehäuse 2 geschoben werden kann. Das heißt, dass die nicht-kreisrunde, mittig angeordnete Durchgangsöffnung 20 bzw. die diese aufweisende Platte 14 in radialer Richtung so gegenüber dem Zylindergehäuse 2 verdreht wird, dass sich die Platte 14 über die Bajonettformelemente 22, 24 der ersten bajonettartigen Befestigungsgeometrie 12 schieben lässt.

Weiterhin ist in Fig. 1 erkennbar, dass sich in axialer Richtung ein zum Zylindergehäuse 2 bzw. zur Platte 14 separat ausgebildeter Clip 26 an die an der bajonettartigen Befestigungsgeometrie 12 angebrachte Platte 14 anschließt, der weiter unten noch näher erläutert wird.

Ferner ist ein Druckanschluss 44 vorhanden, an dem eine nicht dargestellte Ölleitung angeschlossen ist.

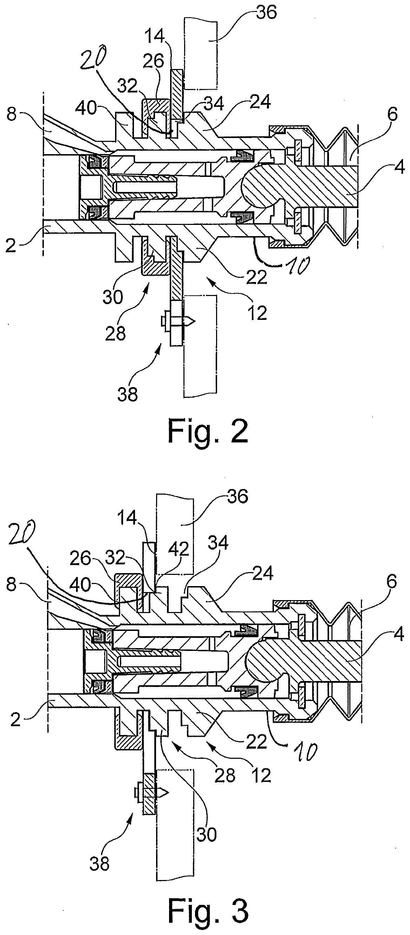

In Fig. 2, die die hydraulische Zylindereinheit 1 in einem Längsschnitt zeigt, ist erkennbar, dass die Mantelfläche 10 des Zylindergehäuses 2 eine zweite bajonettartige Befestigungsgeometrie 28 aufweist, die gegenüber der ersten bajonettartigen Befestigungsgeometrie 12 in radialer Richtung verdreht bzw. über den Umfang des Zylindergehäuses 2 versetzt angeordnet ist. Die zweite bajonettartige Befestigungsgeometrie 28 weist Bajonettformelemente 30 und 32 auf. Des Weiteren ist in Fig. 2 zu erkennen, dass die erste bajonettartige Befestigungsgeometrie 12 und die zweite bajonettartige Befestigungsgeometrie 28 axial hintereinander bzw. benachbart zueinander entlang dem Zylindergehäuse 2 angeordnet sind. Das heißt, dass die erste und zweite bajonettartigen Befestigungsgeometrien 12, 28 die bajonettartige Anbindung der Zylindereinheit 1 an zwei unterschiedlichen Axialpositionen ermöglichen.

In diesem Ausführungsbeispiel liegt die Platte 14 mit ihrer in Fig. 2 rechten Plattenfläche an den Bajonettformelementen 22, 24 der ersten bajonettartigen Befestigungsgeometrie 12 an, so dass die Platte 14 durch eine klemmende Anlage an einem Anlagevorsprung 34 der ersten bajonettartigen Befestigungsgeometrie 12 in Richtung der in Fig. 2 rechten Seite axial fixiert ist. Gegen die gegenüberliegende Plattenfläche der Platte 14 drückt der Clip 26, so dass die Platte 14 auch von der in der Fig. 2 linken axialen Richtung gegen eine ungewünschte Axialbewegung gesichert ist.

Darüber hinaus ist in Fig. 2 zu erkennen, dass die an der bajonettartigen Befestigungsgeometrie 12 anliegende sowie durch den Clip 26 an diese angedrückte, axial gesicherte Platte 14 an einer kraftfahrzeug- oder kupplungsseitigen Haltestruktur 36 anliegt, um an dieser mittels einer (lediglich schematisch dargestellten) Schraubverbindung 38 angebunden bzw. befestigt zu werden. In diesem Ausführungsbeispiel handelt es sich bei der Haltestruktur 36 um eine Spritzschutzwand eines (nicht dargestellten) Kraftfahrzeugs, die in Nachbarschaft zu dem (nicht dargestellten) Kupplungspedal angeordnet ist. Die Schraubverbindung 38 nutzt dabei die beiden Durchgangsöffnungen 16 und 18, durch die sich dann eine Schraube der Schraubverbindung hindurch erstreckt.

In Fig. 3, die die hydraulische Zylindereinheit 1 in einem Längsschnitt zeigt, ist zu erkennen, dass die Platte 14 auch so weit über das Zylindergehäuse 2 der Zylindereinheit 1 geschoben werden kann, dass sich die Platte 14 axial zwischen der zweiten bajonettartigen Befestigungsgeometrie 28 und einem axial dahinter bzw. dazu benachbart angeordneten Cliphalteelement 40 angeordnet ist. Das Cliphalteelement 40 kann zweiteilig ausgestaltet sein und eine obere und eine untere Hälfte aufweisen. Das heißt, dass die Platte 14 gegenüber der in Fig. 2 dargestellten Position axial in Richtung der in Fig. 2 oder 3 linken Seite verschoben ist. Bei gleicher Position der Haltestruktur 36 bedeutet das, dass die gesamte hydraulische Zylindereinheit 1 durch die axiale Positionsverschiebung der Platte 14 näher an das (nicht dargestellte) Kupplungspedal verlagert wurde, das an dem Betätigungselement 4 angebunden ist. Somit ist es mit der hydraulischen Zylindereinheit 1 möglich, allein durch die festlegbare, variable Position der Platte 14 wenigstens zwei unterschiedliche axiale Einbaulagen der Zylindereinheit 1 zu realisieren. Um die Platte 14 auch in dieser Axialposition gegen ein axiales Verrutschen bzw. Verschieben zu sichern, stützt sich die Platte 14 mit der in Fig. 3 rechten Plattenfläche an einem Anlagevorsprung 42 der zweiten bajonettartigen Befestigungsgeometrie 28 ab. Gegen die in Fig. 3 linke Plattenfläche drückt der zuvor an dem Cliphalteelement 40 befestigte Clip 26.

Die Montage der hydraulischen Zylindereinheit 1 kann wie nachfolgend beschrieben ablaufen.

Zunächst kann in Abhängigkeit der jeweiligen Kundenanforderung, d.h. bspw. in Abhängigkeit davon, welcher Bauraum zum Einbau der Zylindereinheit 1 vorhanden ist oder welche Verbindungsart oder Anbindungsmöglichkeit gewünscht ist, entschieden werden, ob die Zylindereinheit 1 mittels der Bajonettverbindung oder, alternativ dazu, mittels der Schraubverbindung unter Zuhilfenahme der Platte 14 an der kraftfahrzeug- oder kupplungsseitigen Haltestruktur 36 montiert werden soll.

Je nach Kundenanforderung kann die hydraulische Zylindereinheit 1 in einem ersten Fall mittels der ersten bajonettartigen Befestigungsgeometrie 12 an der Haltestruktur 36 durch ein bajonettartiges Eindrehen und Sichern in einer ersten Axialposition befestigt werden, wobei die Haltestruktur 36 hierfür ein mit der bajonettartigen Befestigungsgeometrie 12 zusammenwirkendes, (nicht dargestelltes) bajonettartiges Gegenstück aufweist. In einem zweiten Fall ist es ebenfalls möglich, die Zylindereinheit 1 in einer von der ersten Axialposition axial beabstandeten, zweiten Axialposition mittels der zweiten bajonettartigen Befestigungsgeometrie 28 an der Haltestruktur 36 zu befestigen, die in diesem Fall auch ein mit der bajonettartigen Befestigungsgeometrie 28 zusammenwirkendes, (nicht dargestelltes) bajonettartiges Gegenstück aufweist.

In einem dritten und vierten Fall kann, sofern es die Kundenanforderung verlangt, die Zylindereinheit 1 unter Verwendung bzw. Anbringung der Platte 14 auch mittels der Schraubverbindung 38 an der Haltestruktur 36 befestigt werden. Im dritten und vierten Fall weist die Haltestruktur 36 anstatt des (nicht dargestellten) bajonettartigen Gegenstücks eine für ein Zusammenwirken mit der Schraubverbindung 38 geeignete Konstruktion bzw. Geometrie auf. Hierbei sind unterschiedliche Arten der Schraubverbindung 38 möglich. In diesem Ausführungsbeispiel ist die Schraubverbindung 38 in Form von selbstschneidenden Schrauben ausgebildet.

Im dritten und vierten Fall wird zunächst der Clip 26 über das Betätigungselement 4 und die Gummimanschette 6 bis zu der gewünschten Axialposition des Clips 26 über das Zylindergehäuse 2 geschoben und je nach gewünschter Axialposition entweder an der zweiten bajonettartigen Befestigungsgeometrie 28 (dritter Fall) oder dem Cliphalteelement 40 (vierter Fall) befestigt. Anschließend wird die Platte 14 mit der darin befindlichen Durchgangsöffnung 16 über das Betätigungselement 4 und die Gummimanschette 6 des Zylindergehäuses 2 geschoben, bis die Platte 14 an dem als Montagehilfe bzw. Endanschlag dienenden Clip 26 anliegt und dadurch axial nicht weiter verschiebbar ist. Durch den vom Clip 26 gebildeten Endanschlag wird dem Monteur der Zylindereinheit 1 angezeigt, dass die gewünschte Axialposition erreicht ist. Anschließend kann die Platte 14 in der jeweiligen Axialposition mittels der Schraubverbindung 38 an der Haltestruktur 36 befestigt werden.

Ausgehend von dem dargestellten Ausführungsbeispiel kann die hydraulische Zylindereinheit 1 in vielerlei Hinsicht abgewandelt werden. Bspw. ist es möglich, dass die Platte 14 nicht vollständig eben ausgebildet ist, sondern wenigstens abschnittsweise eine topfförmige Geometrie aufweist, so dass die Axialposition der Anbindung an der Haltestruktur 36 mittels der Schraubverbindung 38 zusätzlich variiert werden kann. Dabei kann sich die Topfform der Platte 14 in beide Axialrichtungen erstrecken, so dass weitere Axialpositionen zur Befestigung einer Haltestruktur 36 geschaffen bzw. festgelegt werden können. Dementsprechend kann die hydraulische Zylindereinheit 1 in einem vierten Fall auch in einer weiteren Axialposition an der Haltestruktur 36 befestigt werden.

Darüber hinaus ist es möglich, die Platte 14 nicht als Blechteil, sondern als Kunststoffteil zu fertigen.

Es ist auch denkbar, dass die hydraulische Zylindereinheit 1 kein Geberzylinder, sondern ein Nehmer- oder Seminehmerzylinder ist, der an einer (nicht dargestellten) Haltestruktur eines Kupplungs- oder Getriebegehäuses, jedenfalls in Nachbarschaft zu einer Kraftfahrzeugkupplung angebracht ist.

### Bezugszeichenliste

- 1: Hydraulische Zylindereinheit
- 2: Zylindergehäuse
- 4: Betätigungselement zur Anbindung an ein Kupplungspedal
- 6: Gummimanschette
- 8: Nachlaufanschluss (zum Abschluss einer Nachlaufleitung zum/vom Nachlaufbehälter für ein Fluid
- 10: Mantelfläche des Zylindergehäuses
- 12: erste bajonettartige Befestigungsgeometrie
- 14: Platte / Blech
- 16: radial außen angeordnete Durchgangsöffnung / Bohrung für Anschraubung
- 18: radial außen angeordnete Durchgangsöffnung / Bohrung für Anschraubung
- 20: mittig angeordnete Durchgangsöffnung
- 22: Bajonettformelement der ersten bajonettartigen Befestigungsgeometrie
- 24: Bajonettformelement der ersten bajonettartigen Befestigungsgeometrie
- 26: Clip
- 28: zweite bajonettartige Befestigungsgeometrie
- 30: Bajonettformelement der zweiten bajonettartigen Befestigungsgeometrie
- 32: Bajonettformelement der zweiten bajonettartigen Befestigungsgeometrie
- 34: Anlagevorsprung der ersten bajonettartigen Befestigungsgeometrie
- 36: kraftfahrzeug- oder kupplungsseitige Haltestruktur
- 38: Schraubverbindung
- 40: Cliphalteelement
- 42: Anlagevorsprung der zweiten bajonettartigen Befestigungsgeometrie
- 44: Druckanschluss

## Patentansprüche

1. Hydraulische Zylindereinheit (1) für eine Kraftfahrzeugkupplung, die ein Zylindergehäuse (2) aufweist, das an einer Mantelfläche (10) wenigstens eine bajonettartige Befestigungsgeometrie (12, 28) zur Anbindung der Zylindereinheit (1) an einer kraftfahrzeug- oder kupplungsseitigen Haltestruktur (36) aufweist, wobei an der Befestigungsgeometrie (12, 28) eine separat dazu ausgebildete Platte (14) angebracht ist and in einer axialen Richtung fixiert werden kann,
**dadurch gekennzeichnet, dass**
ein zum Zylindergehäuse (2) separat dazu ausgebildeter Clip (26) als axialer Endanschlag für die Platte (14) angebracht ist und in unterschiedlichen Axialpositionen entlang dem Zylindergehäuse (2) angeordnet werden kann.

2. Hydraulische Zylindereinheit (1) nach Anspruch 1, **dadurch gekennzeichnet, dass** die Mantelfläche (10) zwei axial hintereinander angeordnete bajonettartige Befestigungsgeometrien (12, 28) aufweist.

3. Hydraulische Zylindereinheit (1) nach Anspruch 2, **dadurch gekennzeichnet, dass** die zwei bajonettartigen Befestigungsgeometrien (12, 28) zueinander versetzt und/oder über den Umfang der Mantelfläche (10) verteilt angeordnet sind.

4. Hydraulische Zylindereinheit (1) nach einem der vorstehenden Ansprüche, **dadurch gekennzeichnet, dass** der Clip (26) an einem Bajonettformelement (22, 24, 30, 32) der wenigstens einen bajonettartigen Befestigungsgeometrie (12, 28) oder einem dazu axial benachbart angeordneten Cliphalteelement (40) anbringbar ist.

5. Hydraulische Zylindereinheit (1) nach einem der vorstehenden Ansprüche, **dadurch gekennzeichnet, dass** die Platte (14) durch den Clip (26) gegen einen Anlagevorsprung (34, 42) der wenigstens einen Befestigungsgeometrie (12, 28) drückbar ist.

6. Hydraulische Zylindereinheit (1) nach einem der vorstehenden Ansprüche, **dadurch gekennzeichnet, dass** die Platte (14) und/oder der Clip (26) in axialer Richtung auf das Zylindergehäuse (2) aufschiebbar und gegenüber dem Zylindergehäuse (2) radial verdrehbar sind, wobei der Clip (26) als eine Montagehilfe für die Platte (14) anbringbar ist.

7. Hydraulische Zylindereinheit (1) nach einem der vorangehenden Ansprüche, **dadurch gekennzeichnet, dass** die hydraulische Zylindereinheit (1) ein Geber- oder Nehmerzylinder für eine Kraftfahrzeugkupplung ist.

8. Hydraulische Zylindereinheit (1) nach einem der vorangehenden Ansprüche, **dadurch gekennzeichnet, dass** die Platte (14) eine Blechplatte oder eine Kunststoffplatte ist und/oder eine Topfform aufweist.

## Claims

1. A hydraulic cylinder unit (1) for a motor vehicle clutch, which has a cylinder housing (2) which has at least one bayonet-type fastening geometry (12, 28) on a lateral surface (10) for connecting the cylinder unit (1) to a motor vehicle-side or clutch-side holding structure (36), wherein a separately formed plate (14) is attached to the fastening geometry (12, 28) and can be fixed in an axial direction,
**characterised in that**
a clip (26) formed separately from the cylinder housing (2) is attached as an axial end stop for the plate (14) and can be arranged in different axial positions along the cylinder housing (2).

2. The hydraulic cylinder unit (1) according to claim 1, **characterised in that** the lateral surface (10) has two bayonet-type fastening geometries (12, 28) arranged axially one behind the other.

3. The hydraulic cylinder unit (1) according to claim 2, **characterised in that** the two bayonet-type fastening geometries (12, 28) are offset from one another and/or are arranged distributed over the circumference of the lateral surface (10).

4. The hydraulic cylinder unit (1) according to any one of the preceding claims, **characterised in that** the clip (26) can be attached to a bayonet-shaped element (22, 24, 30, 32) of the at least one bayonet-type fastening geometry (12, 28) or a clip holding element (40) arranged axially adjacent thereto.

5. The hydraulic cylinder unit (1) according to any one of the preceding claims, **characterised in that** the plate (14) can be pressed by the clip (26) against a contact projection (34, 42) of the at least one fastening geometry (12, 28).

6. The hydraulic cylinder unit (1) according to any one of the preceding claims, **characterised in that** the plate (14) and/or the clip (26) can be pushed onto the cylinder housing (2) in the axial direction and can be radially rotated with respect to the cylinder housing (2), wherein the clip (26) can be attached as an assembly aid for the plate (14).

7. The hydraulic cylinder unit (1) according to any one of the preceding claims, **characterised in that** the hydraulic cylinder unit (1) is a master or slave cylinder for a motor vehicle clutch.

8. The hydraulic cylinder unit (1) according to any one of the preceding claims, **characterised in that** the plate (14) is a sheet metal plate or a plastic plate and/or has a cup shape.

## Revendications

1. Unité cylindre (1) hydraulique pour un embrayage de véhicule à moteur, laquelle comprend un boîtier de cylindre (2), lequel comporte sur une surface latérale (10) au moins une géométrie de fixation de type à baïonnette (12, 28) pour fixer l'unité cylindre (1) à une structure de retenue (36) côté véhicule à moteur ou côté embrayage, dans laquelle sur la géométrie de fixation (12, 28), une plaque (14) correspondante formée séparément peut être appliquée et fixée dans une direction axiale,
**caractérisée en ce que**
un clip (26) formé séparément du boîtier de cylindre (2) est appliqué comme une butée axiale pour la plaque (14) et peut être disposé dans différentes positions axiales le long du boîtier de cylindre (2).

2. Unité cylindre (1) hydraulique selon la revendication 1, **caractérisée en ce que** la surface latérale (10) comporte deux géométries de fixation de type à baïonnette (12, 28) disposées axialement l'une derrière l'autre.

3. Unité cylindre (1) hydraulique selon la revendication 2, **caractérisée en ce que** les deux géométries de fixation de type à baïonnette (12, 28) sont décalées l'une de l'autre et/ou sont disposées réparties sur la circonférence de la surface latérale (10).

4. Unité cylindre (1) hydraulique selon l'une quelconque des revendications précédentes, **caractérisée en ce que** le clip (26) peut être appliqué sur un élément de type à baïonnette (22, 24, 30, 32) de l'au moins une géométrie de fixation de type à baïonnette (12, 28) ou sur un élément de retenue de clip (40) disposé adjacent axialement.

5. Unité cylindre (1) hydraulique selon l'une quelconque des revendications précédentes, **caractérisée en ce que** la plaque (14) peut être pressée par le clip (26) contre une saillie de contact (34, 42) de l'au moins une géométrie de fixation (12, 28).

6. Unité cylindre (1) hydraulique selon l'une quelconque des revendications précédentes, **caractérisée en ce que** la plaque (14) et/ou le clip (26) peuvent être poussés dans la direction axiale sur le boîtier de cylindre (2) et peuvent être tournés radialement par rapport au boîtier de cylindre (2), dans laquelle le clip (26) peut être appliqué comme aide au montage pour la plaque (14).

7. Unité cylindre (1) hydraulique selon l'une quelconque des revendications précédentes, **caractérisée en ce que** l'unité cylindre (1) hydraulique est un cylindre maître ou récepteur pour un embrayage de véhicule à moteur.

8. Unité cylindre (1) hydraulique selon l'une quelconque des revendications précédentes, **caractérisée en ce que** la plaque (14) est une plaque en tôle ou une plaque en matière plastique et/ou présente une forme de pot.
